# EUROPEAN PATENT APPLICATION

(11) **EP 4 525 503 A1**
(43) Date of publication of application: **19.03.2025**
(21) Application number: 23802795.7
(22) Date of filing: 06.05.2023
(51) Int. Cl.: H04W 24/02

(54) **SIDELINK POSITIONING METHOD AND APPARATUS, TERMINAL, SERVER, AND WIRELESS ACCESS NETWORK DEVICE**

(30) Priority: 11.05.2022 CN 202210515821
(71) Applicant: Vivo Mobile Communication Co., Ltd., Dongguan, Guangdong 523863 (CN)
(72) Inventor: ZHANG, Hongping, Dongguan, Guangdong 523863 (CN); PAN, Xiang, Dongguan, Guangdong 523863 (CN)
(74) Representative: Cabinet Beaumont
(86) International application number: PCT/CN2023/092467
(87) International publication number: WO 2023/217023

(57) **Abstract**

This application pertains to the field of communication technologies, and discloses a sidelink positioning method and apparatus, a terminal, a server, and a radio access network device. The sidelink positioning method in embodiments of this application includes: receiving, by a first terminal, a configuration message from a radio access network device, where the configuration message is used to configure N sets of SL positioning reference signal configurations, and N is a positive integer greater than 1; determining, by the first terminal, a target SL positioning reference signal configuration in the N sets of SL positioning reference signal configurations; and sending, by the first terminal, an SL positioning reference signal based on the target SL positioning reference signal configuration.

## Description

### CROSS-REFERENCE TO RELATED APPLICATIONS

This application claims priority to Chinese Patent Application No. 202210515821.3, filed in China on May 11, 2022, which is incorporated herein by reference in its entirety.

### TECHNICAL FIELD

This application pertains to the field of communication technologies, and specifically relates to a sidelink positioning method and apparatus, a terminal, a server, and a radio access network device.

### BACKGROUND

In some communication systems, sidelink (sidelink, SL) transmission is supported, that is, data is directly transmitted at a physical layer between terminals. However, currently, a terminal supports only a positioning technology based on a mobile network. To be specific, to implement positioning, a radio access network device sends a downlink positioning reference signal, and a terminal performs measurement; or a terminal sends an uplink positioning reference signal, and a radio access network device performs measurement. It can be learned that, currently, because the terminal cannot support SL positioning, positioning performance of the terminal is poor.

### SUMMARY

Embodiments of this application provide a sidelink positioning method and apparatus, a terminal, a server, and a radio access network device to resolve a problem that positioning performance of a terminal is poor because the terminal cannot support SL positioning.

According to a first aspect, a sidelink positioning method is provided and includes:
receiving, by a first terminal, a configuration message from a radio access network device, where the configuration message is used to configure N sets of SL positioning reference signal configurations, and N is a positive integer greater than 1;
determining, by the first terminal, a target SL positioning reference signal configuration in the N sets of SL positioning reference signal configurations; and
sending, by the first terminal, an SL positioning reference signal based on the target SL positioning reference signal configuration.

According to a second aspect, a sidelink positioning method is provided and includes:
receiving, by a positioning server, a sidelink SL positioning request; and
sending, by the positioning server, a first message to a radio access network device based on the positioning request, where the first message is used to request to activate a target SL positioning reference signal configuration of a first terminal.

According to a third aspect, a sidelink positioning method is provided and includes:
receiving, by a radio access network device, a first message sent by a positioning server, where the first message is used to request to activate a target SL positioning reference signal configuration of a first terminal; and
sending, by the radio access network device, an activation message to the first terminal, where
the activation message is used for at least one of the following:
   activating the target SL positioning reference signal configuration; and
   activating transmission resources associated with the target SL positioning reference signal configuration.

According to a fourth aspect, a sidelink positioning apparatus is provided and includes:
a first receiving module, configured to receive a configuration message from a radio access network device, where the configuration message is used to configure N sets of sidelink SL positioning reference signal configurations, and N is a positive integer greater than 1;
a determining module, configured to determine a target SL positioning reference signal configuration in the N sets of SL positioning reference signal configurations; and
a sending module, configured to send an SL positioning reference signal based on the target SL positioning reference signal configuration.

According to a fifth aspect, a sidelink positioning apparatus is provided and includes:
a first receiving module, configured to receive a sidelink SL positioning request; and
a first sending module, configured to send a first message to a radio access network device based on the positioning request, where the first message is used to request to activate a target SL positioning reference signal configuration of a first terminal.

According to a sixth aspect, a sidelink positioning apparatus is provided and includes:
a first receiving module, configured to receive a first message sent by a positioning server, where the first message is used to request to activate a target SL positioning reference signal configuration of a first terminal; and
a first sending module, configured to send an activation message to the first terminal, where
the activation message is used for at least one of the following:
   activating the target SL positioning reference signal configuration; and
   activating transmission resources associated with the target SL positioning reference signal configuration.

According to a seventh aspect, a terminal is provided and includes a processor and a memory. The memory stores a program or instructions capable of running on the processor. When the program or instructions are executed by the processor, the steps of the sidelink positioning method on the terminal side provided in this embodiment of this application are implemented.

According to an eighth aspect, a terminal is provided and includes a processor and a communication interface. The communication interface is configured to receive a configuration message from a radio access network device, where the configuration message is used to configure N sets of sidelink SL positioning reference signal configurations, and N is a positive integer greater than 1. The communication interface or the processor is configured to determine a target SL positioning reference signal configuration in the N sets of SL positioning reference signal configurations. The communication interface is further configured to send an SL positioning reference signal based on the target SL positioning reference signal configuration.

According to a ninth aspect, a positioning server is provided and includes a processor and a memory. The memory stores a program or instructions capable of running on the processor. When the program or instructions are executed by the processor, the steps of the sidelink positioning method on the positioning server side provided in this embodiment of this application are implemented.

According to a tenth aspect, a positioning server is provided and includes a processor and a communication interface. The communication interface is configured to: receive a sidelink SL positioning request; and send a first message to a radio access network device based on the positioning request, where the first message is used to request to activate a target SL positioning reference signal configuration of a first terminal.

According to an eleventh aspect, a radio access network device is provided and includes a processor and a memory. The memory stores a program or instructions capable of running on the processor. When the program or instructions are executed by the processor, the steps of the sidelink positioning method on the radio access network device side provided in this embodiment of this application are implemented.

According to a twelfth aspect, a radio access network device is provided and includes a processor and a communication interface. The communication interface is configured to: receive a first message sent by a positioning server, where the first message is used to request to activate a target SL positioning reference signal configuration of a first terminal; and send an activation message to the first terminal, where the activation message is used for at least one of the following: activating the target SL positioning reference signal configuration; and activating transmission resources associated with the target SL positioning reference signal configuration.

According to a thirteenth aspect, a readable storage medium is provided. The readable storage medium stores a program or instructions. When the program or instructions are executed by a processor, the steps of the sidelink positioning method on the terminal side provided in this embodiment of this application are implemented, or the steps of the sidelink positioning method on the positioning server side provided in this embodiment of this application are implemented, or the steps of the sidelink positioning method on the radio access network device side provided in this embodiment of this application are implemented.

According to a fourteenth aspect, a chip is provided. The chip includes a processor and a communication interface. The communication interface is coupled to the processor. The processor is configured to run a program or instructions to implement the sidelink positioning method on the terminal side provided in this embodiment of this application, or the processor is configured to run a program or instructions to implement the sidelink positioning method on the positioning server side provided in this embodiment of this application, or the processor is configured to run a program or instructions to implement the sidelink positioning method on the radio access network device side provided in this embodiment of this application.

According to a fifteenth aspect, a computer program or program product is provided. The computer program or program product is stored in a storage medium. The computer program or program product is executed by at least one processor to implement the steps of the sidelink positioning method on the terminal side provided in this embodiment of this application, or the computer program or program product is executed by at least one processor to implement the steps of the sidelink positioning method on the positioning server side provided in this embodiment of this application, or the computer program or program product is executed by at least one processor to implement the steps of the sidelink positioning method on the radio access network device side provided in this embodiment of this application.

According to a sixteenth aspect, a positioning system is provided and includes a terminal, a positioning server, and a radio access network device. The terminal may be configured to perform the steps of the sidelink positioning method according to the first aspect. The positioning server may be configured to perform the steps of the sidelink positioning method according to the second aspect. The radio access network device may be configured to perform the steps of the sidelink positioning method according to the third aspect.

In the embodiments of this application, the first terminal receives the configuration message from the radio access network device, where the configuration message is used to configure the N sets of sidelink SL positioning reference signal configurations, and N is a positive integer greater than 1; the first terminal determines the target SL positioning reference signal configuration in the N sets of SL positioning reference signal configurations; and the first terminal sends the SL positioning reference signal based on the target SL positioning reference signal configuration. In this way, the terminal is enabled to support SL positioning, so that positioning performance of the terminal is improved.

### BRIEF DESCRIPTION OF DRAWINGS

FIG. 1 is a block diagram of a wireless communication system to which an embodiment of this application may be applied;
FIG. 2 is a flowchart of a sidelink positioning method according to an embodiment of this application;
FIG. 3 is a flowchart of another sidelink positioning method according to an embodiment of this application;
FIG. 4 is a flowchart of another sidelink positioning method according to an embodiment of this application;
FIG. 5 is a schematic diagram of a sidelink positioning method according to an embodiment of this application;
FIG. 6 is a schematic diagram of another sidelink positioning method according to an embodiment of this application;
FIG. 7 is a structural diagram of a sidelink positioning apparatus according to an embodiment of this application;
FIG. 8 is a structural diagram of another sidelink positioning apparatus according to an embodiment of this application;
FIG. 9 is a structural diagram of another sidelink positioning apparatus according to an embodiment of this application;
FIG. 10 is a structural diagram of a communication device according to an embodiment of this application;
FIG. 11 is a structural diagram of a terminal according to an embodiment of this application;
FIG. 12 is a structural diagram of a positioning server according to an embodiment of this application; and
FIG. 13 is a structural diagram of a radio access network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

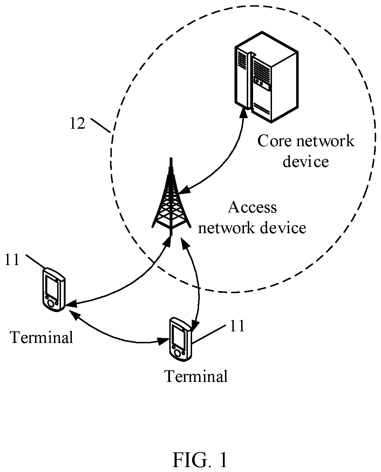

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a roadside unit (Road side unit, RSU), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, a smart helmet, a smart joystick, or the like), a smart wristband, smart clothing, or the like. It should be noted that a specific type of the terminal 11 is not limited in the embodiments of this application.

In the embodiments of this application, sidelink (sidelink, or translated as side link, side-link, sidelink, or the like, SL for short) transmission may be performed between terminals 11, that is, data transmission may be directly performed at a physical layer between the terminals 11. The SL transmission between the terminals 11 may be broadcast, unicast, multicast, or groupcast, or the like. In addition, terminals performing SL transmission may all be online or offline, or some devices may be online and some devices may be offline.

The network-side device 12 may include a radio access network device or a core network device. The radio access network device may also be referred to as a radio access network (Radio Access Network, RAN), a radio access network function, or a radio access network element. The radio access network device may include a base station, a wireless local area network (Wireless Local Area Network, WLAN) access point, a Wireless Fidelity (Wireless Fidelity, Wi-Fi) node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a Transmit/Receive Point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), a network data analytics function (Network Data Analytics Function, NWDAF), a location management function (Location Management Function, LMF), or the like. It should be noted that in the embodiments of this application, only a core network device in the NR system is used as an example for description, but a specific type of the core network device is not limited.

In the embodiments of this application, a positioning server may be a core network device, such as an LMF.

In some embodiments, SL transmission may include two resource allocation modes (mode). One mode is mode 1 in which resources are scheduled by the network-side device. The other mode is mode 2 in which the terminal itself determines what resources are used for transmission. Resource information may come from a broadcast message of the network-side device or preconfigured information. If the terminal works within coverage of the network-side device and has a radio resource control (Radio Resource Control, RRC) connection with the network-side device, the terminal may use resources in mode 1 and/or mode 2. If the terminal works within the coverage of the network-side device but has no RRC connection with the network-side device, the terminal may work in mode 2. If the terminal is beyond the coverage of the network-side device, the terminal may work in mode 2 and perform SL transmission based on the preconfigured information.

For mode 2, a working mode may be as follows:
(1) After a resource selection is triggered, the terminal first determines a resource selection window, where a lower boundary of the resource selection window is a time T1 after the triggering of the resource selection and an upper boundary of the resource selection is a time T2 after the triggering, T2 is a value selected in terminal-implemented mode in a packet delay budget (packet delay budget, PDB) of a transport block (Transport Block, TB) of the terminal, and T2 is not earlier than T1.
(2) Before the resource selection, the terminal needs to determine a candidate resource set (candidate resource set) for the resource selection. That is, the terminal compares reference signal received power (Reference Signal Received Power, RSRP) measured on a resource in the resource selection window with a corresponding RSRP threshold (RSRP threshold). If the RSRP is lower than the RSRP threshold, the resource may be included into the candidate resource set.
(3) After the resource set is determined, the terminal randomly selects a transmission resource in the candidate resource set. In addition, during current transmission, the terminal may reserve a transmission resource for subsequent transmission.

A sidelink positioning method and apparatus, a terminal, and a server provided in the embodiments of this application are hereinafter described in detail by using some embodiments and application scenarios thereof with reference to the accompanying drawings.

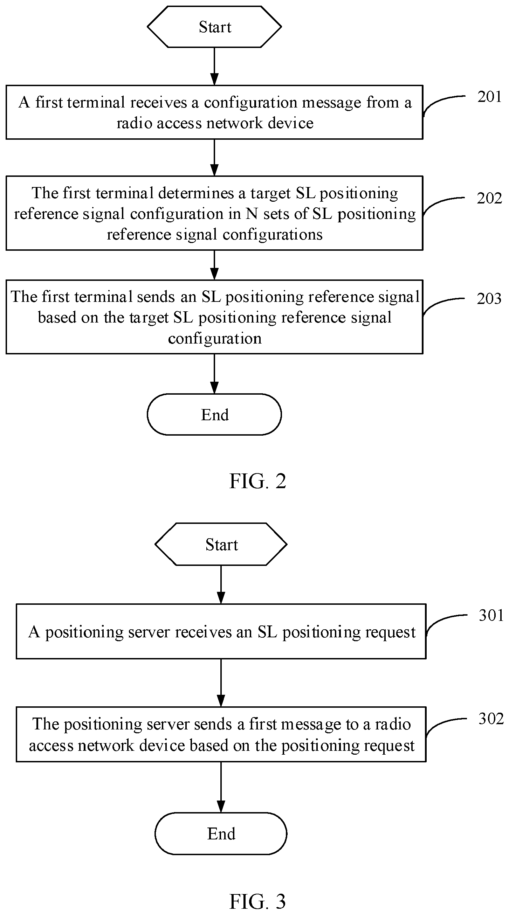

FIG. 2 is a flowchart of a sidelink positioning method according to an embodiment of this application. As shown in FIG. 2, the method includes the following steps.

Step 201: A first terminal receives a configuration message from a radio access network device, where the configuration message is used to configure N sets of SL positioning reference signal (Positioning Reference Signal, PRS) configurations, and N is a positive integer greater than 1.

That the configuration message is used to configure N sets of SL positioning reference signal PRS configurations may be understood as: the configuration message carries the N sets of SL positioning reference signal configurations.

In some implementations, the configuration message may be an RRC configuration message, such as an RRC reconfiguration (RRC Reconfiguration) message.

It should be noted that in this embodiment of this application, step 201 may be understood as a preconfiguration step, that is, the N sets of SL positioning reference signal configurations in this step may be configured before an SL positioning request is received, or may be used for SL positioning for one or more times. In other words, in this embodiment of this application, step 201 does not need to be performed every time SL positioning is performed, step 201 is performed once and the configurations may be used for SL positioning for one or more times, and same or different configurations in the N sets of SL positioning reference signal configurations may be used for different SL positioning.

It should be noted that in this application, SL positioning refers to a positioning mechanism in which one or more terminals send SL positioning reference signals on a PC5 interface, and one or more other terminals measure the SL positioning reference signals to obtain locations.

In this embodiment of this application, an SL positioning reference signal configuration may include, but is not limited to, at least one of the following:
a bandwidth of an SL positioning reference signal, transmission resources for the SL positioning reference signal, a physical layer configuration of the SL positioning reference signal, SL positioning reference signal sparsity, transmit power of the SL positioning reference signal, and the like.

Step 202: The first terminal determines a target SL positioning reference signal configuration in the N sets of SL positioning reference signal configurations.

That the first terminal determines a target SL positioning reference signal configuration in the N sets of SL positioning reference signal configurations may be: the terminal autonomously selects the target SL positioning reference signal configuration from the N sets of SL positioning reference signal configurations, or may select the target SL positioning reference signal configuration from the N sets of SL positioning reference signal configurations based on a received activation message.

Step 202: The first terminal sends an SL positioning reference signal based on the target SL positioning reference signal configuration.

The sending an SL positioning reference signal may be sending the SL positioning reference signal on a sidelink interface (PC5 interface), so that a second terminal measures the SL positioning reference signal to obtain a measurement result, where the measurement result is used to determine positioning of the second terminal or the first terminal.

In this embodiment, the SL positioning reference signal may be a reference signal that is sent by the terminal on the PC5 interface and that may be used for positioning measurement. For example, the SL positioning reference signal may be a newly introduced positioning reference signal on PC5, or a reference signal of the PC5 interface defined in a protocol may be reused.

In this embodiment of this application, the terminal can support SL positioning by performing the foregoing steps. In this way, positioning performance of the terminal is improved, and terminal positioning can be implemented in a scenario without mobile network coverage.

In addition, because the N sets of SL positioning reference signal configurations may be preconfigured, when positioning is required, the target SL positioning reference signal configuration is directly used to send the SL positioning reference signal, thereby reducing a positioning delay. In addition, because N is an integer greater than 1, a plurality of sets of positioning reference signal configurations may be preconfigured, and a corresponding configuration may be flexibly determined based on an actual requirement, for SL positioning in a subsequent positioning process, to improve flexibility of SL positioning.

In an optional implementation, that the first terminal determines a target SL positioning reference signal configuration in the N sets of sidelink SL positioning reference signal configurations includes:
the first terminal receives an activation message from the radio access network device, and determines the target SL positioning reference signal configuration based on the activation message, where
the activation message is used to activate SL positioning reference signal transmission.

In some implementations, the activation message is used for at least one of the following:
activating the target SL positioning reference signal configuration; and
activating transmission resources associated with the target SL positioning reference signal configuration.

The activation message may be sent by using a media access control (Media Access Control, MAC) control element (Control Element, CE) or downlink control information (Downlink Control Information, DCI), so that the SL positioning reference signal transmission can be activated by using the MAC CE or DCI. Specifically, the target SL positioning reference signal configuration may be activated, or transmission resources associated with the SL positioning reference signal are activated. For example, the transmission resources associated with the target SL positioning reference signal configuration are activated, which means that sending of the SL positioning reference signal corresponding to the target SL positioning reference signal configuration is activated.

In some implementations, the activation message may include an identifier or index of the target SL positioning reference signal configuration, or may include indexes of resources associated with the target SL positioning reference signal configuration. In addition, when the transmission resources associated with the target SL positioning reference signal configuration are resources of configured grant type 2 (configured grant type 2) in mode 1 (mode 1), the activation message may further carry time-frequency resource information of the resources of configured grant type 2, so that the first terminal directly sends the SL positioning reference signal on the resources corresponding to the time-frequency resource information.

In this implementation, the target SL positioning reference signal configuration is determined by using the activation message, to support a dynamic change of the configuration for sending the SL positioning reference signal and improve flexibility of SL positioning. In addition, in a case that the activation message is the MAC CE or DCI, activation by using the MAC CE or DCI can reduce the delay as compared with activation by using an RRC message.

Optionally, the configuration message is further used to configure at least one of the following:
transmission resources associated with the N sets of SL positioning reference signal configurations;
an activation status of the N sets of SL positioning reference signal configurations; and
an activation status of the transmission resources associated with the N sets of SL positioning reference signal configurations.

The transmission resources may be resources in mode 1 (mode 1) or mode 2 (mode 2) defined in a protocol.

In some implementations, the transmission resources may include at least one of the following:
resources of a first configured grant type, resources of a second configured grant type, dynamically scheduled resources, and autonomously selected resources, where
the resources of the first configured grant type are transmission resources on which the first terminal is capable of directly sending an SL positioning reference signal;
the resources of the second configured grant type are transmission resources on which the first terminal sends an SL positioning reference signal based on an activation command;
the dynamically scheduled resources are resources dynamically scheduled by the radio access network device for sending an SL positioning reference signal; and
the autonomously selected resources are resources selected by the first terminal through sensing for sending an SL positioning reference signal.

The resources of the first configured grant type may be resources of configured grant type 1 (configured grant type 1) in mode 1 (mode 1) defined in a protocol, and the transmission resources on which the first terminal is capable of directly sending the SL positioning reference signal may be understood as: the terminal can immediately use these transmission resources to send the SL positioning reference signal. In addition, the configuration message may indicate a resource pool in which the resources of the first configured grant type are located.

The resources of the second configured grant type may be resources of configured grant type 2 (configured grant type 2) in mode 1 (mode 1) defined in a protocol, and the transmission resources on which the first terminal sends the SL positioning reference signal based on the activation command may be understood as: the terminal can send the SL positioning reference signal on these resources only after receiving the activation command of these resources.

The autonomously selected resources may be resources in mode 2 (mode 2) defined in a protocol, these resources are resources autonomously selected by the terminal, and these autonomously selected resources may be a resource pool of one or more autonomously selected resources indicated by the network side for sending the SL positioning reference signal.

The activation status of the N sets of SL positioning reference signal configurations may be that each set of SL positioning reference signal configurations has a corresponding activation status, for example, active or inactive. When the activation status is active, the first terminal can immediately use these transmission resources to send the SL positioning reference signal; or when the activation status is inactive, the first terminal needs to wait for subsequent reception of the activation command before using these transmission resources to send the SL positioning reference signal. The activation status of the transmission resources associated with the N sets of SL positioning reference signal configurations is similar to the foregoing.

In addition, each set of SL positioning reference signal configurations may correspond to a configuration index, so that the SL positioning reference signal configuration can be activated by using the configuration index. A transmission resource associated with the SL positioning reference signal configuration may also correspond to a resource index, so that the transmission resource associated with the SL positioning reference signal configuration can be activated by using the resource index.

In an optional implementation, the first terminal is a target terminal (target UE) for SL positioning, or the first terminal is an assisting terminal or an anchor terminal (anchor UE) for SL positioning, for example, an RSU.

That the first terminal is a target terminal for SL positioning may be understood as: an SL positioning request that triggers SL positioning is intended for the first terminal, that is, the first terminal is positioned. For example, a positioning server receives the SL positioning request for the first terminal and sends an SL positioning reference signal configuration activation request to the radio access network device, and then the radio access network device sends an activation message to the first terminal, so that the first terminal sends the SL positioning reference signal based on the target SL positioning reference signal configuration in response to the activation message.

In this implementation, the first terminal sends the SL positioning reference signal, and the second terminal measures the SL positioning reference signal, where the obtained measurement result is used to determine positioning of the first terminal. For example, the measurement result is reported to the positioning server, and the positioning server calculates the positioning of the first terminal based on the measurement result, or the second terminal calculates the positioning of the first terminal based on the measurement result.

In this implementation, the first terminal may send the SL positioning reference signal to implement the positioning of the first terminal, to avoid a problem that the first terminal fails to be positioned because no terminal around the first terminal can send an SL positioning reference signal.

That the first terminal is an assisting terminal or an anchor terminal for SL positioning may be understood as: the first terminal is an assisting terminal or an anchor terminal for positioning the second terminal, that is, the first terminal assists in positioning the second terminal. It should be noted that there may be one or more first terminals, each of which sends an SL positioning reference signal to assist in positioning the second terminal.

In this embodiment of this application, the first terminal receives the configuration message from the radio access network device, where the configuration message is used to configure the N sets of sidelink SL positioning reference signal configurations, and N is a positive integer greater than 1; the first terminal determines the target SL positioning reference signal configuration in the N sets of SL positioning reference signal configurations; and the first terminal sends the SL positioning reference signal based on the target SL positioning reference signal configuration. In this way, the terminal is enabled to support SL positioning, so that positioning performance of the terminal is improved.

FIG. 3 is a flowchart of another sidelink positioning method according to an embodiment of this application. As shown in FIG. 3, the method includes the following steps.

Step 301: A positioning server receives an SL positioning request.

The receiving an SL positioning request may be receiving an SL positioning request for a first terminal or a second terminal.

The receiving an SL positioning request may be receiving an SL positioning request sent by an application server or another device, or may be receiving an SL positioning request sent by an internal module of the positioning server, that is, the SL positioning request may be actively triggered by the positioning server.

Step 302: The positioning server sends a first message to a radio access network device based on the positioning request, where the first message is used to request to activate a target SL positioning reference signal configuration of a first terminal.

That the positioning server sends a first message to a radio access network device based on the positioning request may be: sending the first message to one or more radio access network devices, where the first message may request to activate target SL positioning reference signal configuration(s) of one or more first terminals, and target SL positioning reference signal configurations of different first terminals are the same or different.

In this embodiment, the first message may enable the first terminal to send an SL positioning reference signal based on the target SL positioning reference signal configuration, so that the terminal supports SL positioning, to improve positioning performance of the terminal.

In an optional implementation, the first message includes at least one of the following:
identification information of the first terminal; and
an identifier or index of the target SL positioning reference signal configuration.

The identification information of the terminal may include a terminal identity (UE ID) or an SL layer 2 identity (layer 2 ID) of the terminal.

In this implementation, the first terminal and the target SL positioning reference signal configuration may be indicated flexibly by using at least one of the identification information of the first terminal and the identifier or index of the target SL positioning reference signal configuration, to improve flexibility of terminal positioning.

It should be noted that in some implementations, the first message may not include the identification information of the first terminal. For example, the first terminal may be determined by the radio access network device. Alternatively, in some implementations, the first message may not include the identifier or index of the target SL positioning reference signal configuration. For example, the target SL positioning reference signal configuration of the first terminal may be determined by the radio access network device.

In an optional implementation, before the positioning server receives the SL positioning request, the method further includes:
the positioning server receives a second message sent by the radio access network device, where the second message includes at least one of the following:
information of the first terminal; and
information of an SL positioning reference signal configuration of the first terminal, where the information of the SL positioning reference signal configuration includes the target SL positioning reference signal configuration of the first terminal.

That the positioning server receives a second message sent by the radio access network device may be: receiving a second message sent by one or more radio access network devices.

The second message may include information of one or more second terminals, and the first terminals include the first terminal in step 402.

The information of the first terminal may include at least one of the following:
location information of the first terminal; and
identification information of the first terminal.

The location information of the first terminal may be latitude and longitude information of the first terminal.

The identification information of the first terminal may include an SL layer 2 identity (Layer 2 ID) of the first terminal.

The information of the SL positioning reference signal configuration of the first terminal may include one or more sets of target SL positioning reference signal configurations, for example, including N sets of SL positioning reference signal configurations.

In this implementation, because the second message includes at least one of the information of the first terminal and the information of the SL positioning reference signal configuration of the first terminal, the positioning server can select the first terminal and the target SL positioning reference signal configuration based on a positioning requirement.

It should be noted that in some implementations, the second message may not include the information of the first terminal, for example, information of one or more first terminals is preconfigured on the positioning server; and the second message may not include the information of the SL positioning reference signal configuration of the first terminal, for example, the information of the SL positioning reference signal configuration of the first terminal is preconfigured on the positioning server.

Optionally, before the positioning server receives the second message sent by the radio access network device, the method further includes:
the positioning server sends a third message to the radio access network device, where the third message includes at least one of the following:
one or more sets of positioning reference signal characteristic information;
one or more sets of quality of service (Quality of Service, QoS) information; and
one or more sets of configuration quantities.

That the positioning server sends a third message to the radio access network device may be: sending a third message to one or more radio access network devices.

The positioning reference signal characteristic information may be characteristic information such as a bandwidth and a transmission period of the positioning reference signal. In addition, each set of positioning reference signal characteristic information may correspond to one or more sets of positioning reference signal configurations. When a plurality of sets of positioning reference signal characteristic information are included, QoS information corresponding to different positioning reference signal characteristic information may be different.

The QoS information may be QoS information such as a positioning delay and positioning accuracy. The QoS information may also be referred to as SL QoS information.

The configuration quantity is a quantity of SL positioning reference signal configurations, and different SL positioning reference signal configurations may correspond to different QoS information.

In this implementation, a specific SL positioning reference signal configuration may be obtained by using at least one of the positioning reference signal characteristic information, the QoS information, and the configuration quantity, to meet different positioning requirements. Specifically, an SL positioning reference signal configuration matching the positioning reference signal characteristic information, an SL positioning reference signal configuration matching the QoS information, or an SL positioning reference signal configuration matching the configuration quantity may be obtained.

It should be noted that in some implementations, the third message may not be sent. For example, the radio access network device actively reports the second message to the positioning server.

Optionally, the third message is a message associated with a terminal; or
the third message is a message not associated with a terminal.

That the third message is a message associated with a terminal may be that a third message is sent for each first terminal, that is, each third message is a message associated with a terminal, and an SL positioning reference signal configuration corresponding to the first terminal is obtained by using the third message.

That the third message is a message not associated with a terminal may be that the third message is not intended for a specific terminal, that is, the third message is a message not associated with any terminal. In this case, the radio access network device may autonomously select the first terminal and determine the corresponding SL positioning reference signal configuration.

In this implementation, the message associated with the terminal or the message not associated with the terminal may be supported in implementing SL positioning of the terminal. In this way, the need to introduce an additional specific message is avoided, and complexity of SL positioning of the terminal is reduced.

In an optional implementation, the method further includes:
the positioning server sends an indication message to a second terminal, where the indication message is used to indicate the target SL positioning reference signal configuration.

In this implementation, the indication message may be used to instruct the second terminal to perform SL positioning reference signal measurement based on the target SL positioning reference signal configuration, so that the second terminal can complete the SL positioning reference signal measurement more quickly and accurately.

Optionally, the indication message is further used to indicate at least one of the following:
time-frequency transmission resources associated with the target SL positioning reference signal configuration; and
identification information of the first terminal.

The time-frequency transmission resources associated with the target SL positioning reference signal configuration are time-frequency transmission resources in transmission resources associated with the target SL positioning reference signal configuration.

In an optional implementation, the method further includes:
the positioning server sends a positioning request message to the second terminal, where the positioning request message is used to request the second terminal to perform SL positioning reference signal measurement.

In this implementation, the positioning request message may enable the second terminal to perform the SL positioning reference signal measurement in time to reduce the positioning delay.

It should be noted that in some implementations, the positioning server may alternatively not send the positioning request message, and the second terminal may directly perform the SL positioning reference signal measurement based on the indication message.

It should be noted that this embodiment is used as an implementation of the positioning server corresponding to the embodiment shown in FIG. 2. For a specific implementation of this embodiment, refer to the related description of the embodiment shown in FIG. 2. To avoid repetition, details are not described in this embodiment again.

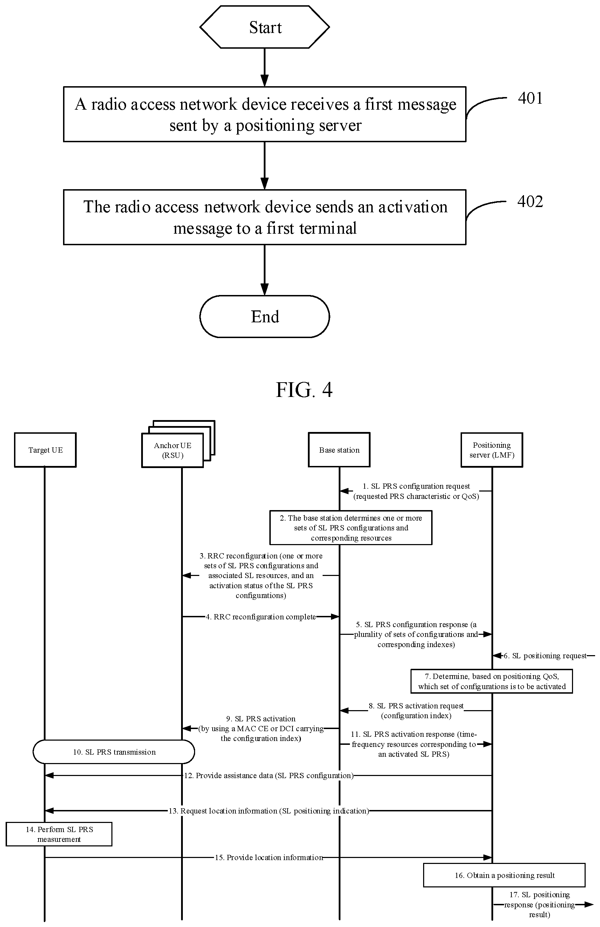

FIG. 4 is a flowchart of another sidelink positioning method according to an embodiment of this application. As shown in FIG. 4, the method includes the following steps.

Step 401: A radio access network device receives a first message sent by a positioning server, where the first message is used to request to activate a target SL positioning reference signal configuration of a first terminal.

Step 402: The radio access network device sends an activation message to the first terminal.

The activation message is used for at least one of the following:
activating the target SL positioning reference signal configuration; and
activating transmission resources associated with the target SL positioning reference signal configuration.

For the first message, refer to the corresponding description of the embodiment shown in FIG. 3. Details are not described herein again.

For the activation message, refer to the corresponding description of the embodiment shown in FIG. 2. Details are not described herein again.

In this embodiment, the foregoing steps may enable the first terminal to send an SL positioning reference signal to support SL positioning of the terminal, thereby improving positioning performance of the terminal.

In an optional implementation, the first message includes at least one of the following:
identification information of the first terminal; and
an identifier or index of the target SL positioning reference signal configuration.

In an optional implementation, before the radio access network device receives the first message sent by the positioning server, the method further includes:
the radio access network device sends a second message to the positioning server, where the second message includes at least one of the following:
information of the first terminal; and
information of an SL positioning reference signal configuration of the first terminal, where the information of the SL positioning reference signal configuration includes the target SL positioning reference signal configuration of the first terminal.

Optionally, the information of the first terminal includes at least one of the following:
location information of the first terminal; and
identification information of the first terminal.

Optionally, the identification information of the first terminal includes an SL layer 2 identity of the first terminal.

In an optional implementation, before the radio access network device sends the second message to the positioning server, the method further includes:
the radio access network device receives a third message from the positioning server, where the third message includes at least one of the following:
one or more sets of positioning reference signal characteristic information;
one or more sets of quality of service QoS information; and
a configuration quantity.

In an optional implementation, before the radio access network device receives the first message sent by the positioning server, the method further includes:
the radio access network device sends a configuration message to the first terminal, where the configuration message is used to configure N sets of SL positioning reference signal configurations, the target SL positioning reference signal configuration is a configuration in the N sets of SL positioning reference signal configurations, and N is a positive integer greater than 1.

In an optional implementation, the configuration message is further used to configure at least one of the following:
transmission resources associated with the N sets of SL positioning reference signal configurations;
an activation status of the N sets of SL positioning reference signal configurations; and
an activation status of the transmission resources associated with the N sets of SL positioning reference signal configurations.

In an optional implementation, the transmission resources include at least one of the following:
resources of a first configured grant type, resources of a second configured grant type, dynamically scheduled resources, and autonomously selected resources, where
the resources of the first configured grant type are transmission resources on which the first terminal is capable of directly sending an SL positioning reference signal;
the resources of the second configured grant type are transmission resources on which the first terminal sends an SL positioning reference signal based on an activation command;
the dynamically scheduled resources are resources dynamically scheduled by the radio access network device for sending an SL positioning reference signal; and
the autonomously selected resources are resources selected by the first terminal through sensing for sending an SL positioning reference signal.

It should be noted that this embodiment is used as an implementation of the positioning server corresponding to the embodiments shown in FIG. 2 and FIG. 3. For a specific implementation of this embodiment, refer to the related descriptions of the embodiments shown in FIG. 2 and FIG. 3. To avoid repetition, details are not described in this embodiment again.

The sidelink positioning methods provided in the embodiments of this application are illustrated hereinafter by using two embodiments:
Main technical solutions in the following two embodiments are as follows:
For positioning based on a mobile network (based on an LMF), a network side preconfigures a plurality of sets of SL PRS configurations for anchor UE (for example, an RSU). When a positioning request arrives, the LMF determines, based on positioning QoS, a set of SL PRS configurations to be used, and sends a message to a base station to activate the determined set of SL PRS configurations. Then the base station performs activation by using a MAC CE or DCI, to enable the UE to use this set of SL PRS configurations to send an SL PRS on a PC5 interface. In this way, the plurality of sets of SL PRS configurations are preconfigured, and when positioning measurement is needed, quick activation is performed by using the MAC CE or DCI, thereby reducing a positioning delay.

### Embodiment 1

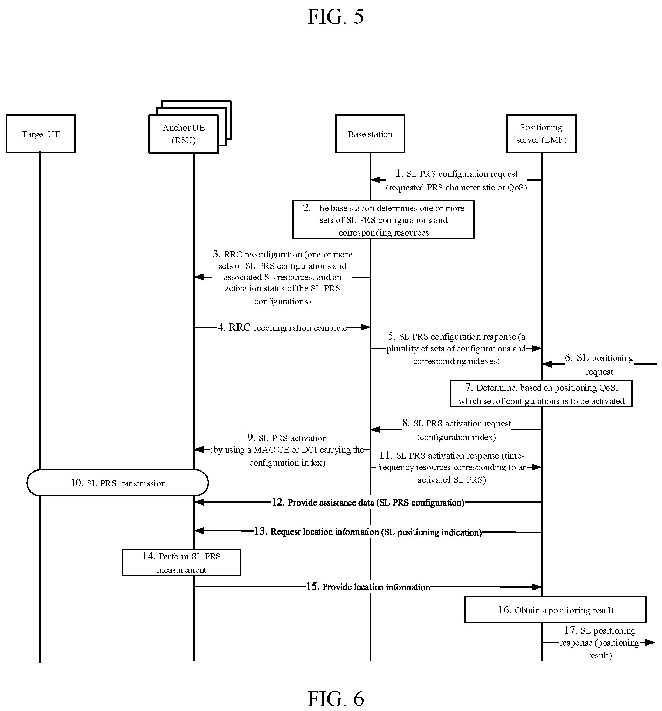

In this embodiment, a positioning procedure in which anchor UE sends an SL PRS is used as an example for description. As shown in FIG. 5, the embodiment includes the following steps.

Step 1: Before a positioning request arrives, an LMF sends a first message to a base station, where the message is used to request to obtain SL PRS configuration information of anchor UE (which may also be referred to as assisting UE) within coverage of the base station. The first message may include one or more of the following:
one or more sets of requested PRS characteristic information (such as a PRS bandwidth and a PRS transmission period), where optionally, a plurality of sets of PRS characteristic information correspond to different QoS requirements;
one or more sets of requested QoS information (for example, a positioning delay and positioning accuracy); and
a quantity of sets of SL PRS configurations (different SL PRS configurations correspond to different QoS requirements), that is, a quantity of sets of SL PRS configurations corresponding to different QoS requirements and requested to be provided.

An SL PRS is a reference signal that is sent by UE on a PC5 interface and that may be used for positioning measurement. The SL PRS may be a newly introduced positioning reference signal on PC5, or a reference signal of the PC5 interface defined in a protocol may be reused.

Step 2: The base station determines one or more sets of SL PRS configurations and corresponding transmission resources for the SL PRS based on the first message. For example, each set of PRS characteristic information or each set of QoS information corresponds to one set of SL PRS configurations.

The first message may be a message associated with UE, and in this case, the base station determines a corresponding SL PRS configuration for the associated UE; or
the first message may be a message not associated with UE, and in this case, the base station selects some UEs, such as RSUs, and determines corresponding SL PRS configurations for the UEs.

Step 3: The base station sends an RRC reconfiguration (RRC Reconfiguration) message to the anchor UE, where the message carries the one or more sets of SL PRS configurations and the corresponding transmission resources for the SL PRS (on the PC5 interface); and each set of configurations may correspond to one configuration index.

Optionally, the RRC reconfiguration message further carries an activation status of the SL PRS configurations (or the transmission resources for the SL PRS). When the activation status is active, the anchor UE immediately uses these transmission resources to send the SL PRS; or when the activation status is inactive, the anchor UE needs to wait for subsequent reception of an activation command before sending the SL PRS.

Optionally, the transmission resources for the SL PRS may be resources of configured grant type 1 (configured grant type 1) or resources of configured grant type 2 (configured grant type 2) in mode 1 (mode 1). The two types of resources are both periodically granted resources. When the transmission resources are the resources of configured grant type 1, the anchor UE immediately uses these transmission resources to send the SL PRS. Optionally, the RRC reconfiguration message may indicate a resource pool in which the resources of configured grant type 1 are located. When the transmission resources are the resources of configured grant type 2, the anchor UE needs to wait for subsequent reception of the activation command before sending the SL PRS.

Optionally, the transmission resources for the SL PRS may also be resources dynamically scheduled by the base station in mode 1, or may be resources autonomously selected by the anchor UE in mode 2 (mode 2). Optionally, when the transmission resources are the resources autonomously selected by the anchor UE in mode 2, the RRC reconfiguration message may indicate one or more resource pools that can be used to send the SL PRS.

Step 4: The anchor UE sends an RRC reconfiguration complete (Reconfiguration Complete) message to the base station; and if the anchor UE receives, in step 3, an SL PRS configuration requiring that the SL PRS should be immediately sent, the UE starts sending the SL PRS on the PC5 interface.

Step 5: The base station sends a response message for the first message to the LMF, where the response message carries the one or more sets of SL PRS configurations of the anchor UE, configuration indexes (if there are a plurality of sets), and transmission resources corresponding to each set of configurations, and optionally, further carries one or more of the following information:
location information of each anchor UE, such as latitude and longitude information; and
ID information of each anchor UE, such as a layer 2 ID of the anchor UE.

It should be noted that the response message may include the SL PRS configuration of one or more anchor UEs.

Step 6: The LMF receives a positioning request for target UE.

Step 7: The LMF determines, based on QoS and other information in the positioning request, which set of SL PRS configurations of which anchor UE is to be activated.

If it is determined in step 3 that the resources of configured grant type 1 in mode 1 are used, step 7/8/9/11 may be skipped.

Step 8: The LMF sends a second message to one or more base stations, where the second message is used to request the base station to activate the SL PRS configuration, and the second message includes one or more of the following:
ID(s) of one or more anchor UEs requiring activation, for example, an index of the anchor UE and a layer 2 ID of the anchor UE; and
an index of the SL PRS configuration (of each anchor UE) that needs to be activated.

Step 9: The base station sends a MAC CE or DCI to the anchor UE to activate transmission of the SL PRS or activate the transmission resources associated with the SL PRS, where the MAC CE or DCI may carry the index of the SL PRS configuration or indexes of resources associated with the SL PRS configuration. Optionally, when the transmission resources in step 3 are the resources of configured grant type 2 in mode 1, the MAC CE or DCI may further carry time-frequency resource information of the resources of configured grant type 2. Activation by using the MAC CE or DCI can reduce the delay as compared with activation by using an RRC message.

Step 10: The anchor UE transmits the SL PRS on designated (activated) resources on the PC5 interface.

Step 11: The base station sends a response message for the second message to the LMF.

Optionally, when the transmission resources in step 3 are the resources of configured grant type 2 in mode 1, the response message may further carry time-frequency resource information of the transmission resources for the SL PRS.

Step 12: The LMF sends a provide assistance data (Provide Assistance Data) message to the target UE, where the message carries an SL PRS configuration and corresponding transmission resource information of an SL PRS (on the PC5 interface). The message may carry SL PRS configurations of a plurality of anchor UEs and corresponding transmission resource information. Optionally, the message may carry a UE ID of each anchor UE, such as a layer 2 ID. Optionally, the plurality of anchor UEs or SL PRS configurations have different measurement priorities. For example, a higher position in an order in a list means a higher measurement priority.

Step 13: The LMF sends a request location information (Request Location Information) message to the target UE, requesting the target UE to perform SL positioning measurement.

Step 14: The target UE performs SL PRS measurement based on SL PRS information provided in step 12.

Step 15: The target UE sends a measurement result of the SL PRS to the LMF.

Step 16: The LMF obtains location information of the target UE based on the measurement result of the SL PRS.

Step 17: The LMF sends the location information of the target UE to a requester.

### Embodiment 2

In this embodiment, a positioning procedure in which target UE sends an SL PRS signal and anchor UE performs measurement is used as an example for description. As shown in FIG. 6, the embodiment includes the following steps.

Step 1: Before a positioning request arrives, an LMF sends a first message to a base station, where the message is used to request to obtain SL PRS configuration information of anchor UE (which may also be referred to as assisting UE) within coverage of the base station. The first message may include one or more of the following:
one or more sets of requested PRS characteristic information (such as a PRS bandwidth and a PRS transmission period), where optionally, a plurality of sets of PRS characteristic information correspond to different QoS requirements;
one or more sets of requested QoS information (for example, a positioning delay and positioning accuracy); and
a quantity of sets of SL PRS configurations (different SL PRS configurations correspond to different QoS requirements).

An SL PRS is a reference signal that is sent by UE on a PC5 interface and that may be used for positioning measurement. The SL PRS may be a newly introduced positioning reference signal on PC5, or a reference signal of the PC5 interface defined in a protocol may be reused.

Step 2: The base station determines one or more sets of SL PRS configurations and corresponding transmission resources for the SL PRS based on the first message. For example, each set of PRS characteristic information or each set of QoS information corresponds to one set of SL PRS configurations.

The first message may be a message associated with UE, and in this case, the base station determines a corresponding SL PRS configuration for the associated UE; or
the first message may be a message not associated with UE, and in this case, the base station selects some UEs, such as RSUs, and determines corresponding SL PRS configurations for the UEs.

Step 3: The base station sends an RRC reconfiguration (RRC Reconfiguration) message to the anchor UE, where the message carries the one or more sets of SL PRS configurations and the corresponding transmission resources for the SL PRS (on the PC5 interface); and each set of configurations may correspond to one configuration index.

Optionally, the RRC reconfiguration message further carries an activation status of the SL PRS configurations (or the transmission resources for the SL PRS). When the activation status is active, the anchor UE immediately uses these transmission resources to send the SL PRS; or when the activation status is inactive, the anchor UE needs to wait for subsequent reception of an activation command before sending the SL PRS.

Optionally, the transmission resources for the SL PRS may be resources of configured grant type 1 (configured grant type 1) or resources of configured grant type 2 (configured grant type 2) in mode 1 (mode 1). The two types of resources are both periodically granted resources. When the transmission resources are the resources of configured grant type 1, the anchor UE immediately uses these transmission resources to send the SL PRS. Optionally, the RRC reconfiguration message may indicate a resource pool in which the resources of configured grant type 1 are located. When the transmission resources are the resources of configured grant type 2, the anchor UE needs to wait for subsequent reception of the activation command before sending the SL PRS.

Optionally, the transmission resources for the SL PRS may also be resources dynamically scheduled by the base station in mode 1, or may be resources autonomously selected by the anchor UE in mode 2 (mode 2). Optionally, when the transmission resources are the resources autonomously selected by the anchor UE in mode 2, the RRC reconfiguration message may indicate one or more resource pools that can be used to send the SL PRS.

Step 4: The anchor UE sends an RRC reconfiguration complete (Reconfiguration Complete) message to the base station; and if the anchor UE receives, in step 3, an SL PRS configuration requiring that the SL PRS should be immediately sent, the UE starts sending the SL PRS on the PC5 interface.

Step 5: The base station sends a response message for the first message to the LMF, where the response message carries the one or more sets of SL PRS configurations of the anchor UE, configuration indexes (if there are a plurality of sets), and transmission resources corresponding to each set of configurations, and optionally, further carries one or more of the following information:
location information of each anchor UE, such as latitude and longitude information; and
ID information of each anchor UE, such as a layer 2 ID of the anchor UE.

It should be noted that the response message may include the SL PRS configuration of one or more anchor UEs.

Step 6: The LMF receives a positioning request for target UE.

Step 7: The LMF determines, based on QoS and other information in the positioning request, which set of SL PRS configurations of which anchor UE is to be activated.

If it is determined in step 3 that the resources of configured grant type 1 in mode 1 are used, step 7/8/9/11 may be skipped.

Step 8: The LMF sends a second message to one or more base stations, where the second message is used to request the base station to activate the SL PRS configuration, and the second message includes one or more of the following:
ID(s) of one or more anchor UEs requiring activation, for example, an index of the anchor UE and a layer 2 ID of the anchor UE; and
an index of the SL PRS configuration (of each anchor UE) that needs to be activated.

Step 9: The base station sends a MAC CE or DCI to the target UE to activate transmission of the SL PRS or activate the transmission resources associated with the SL PRS, where the MAC CE or DCI may carry the index of the SL PRS configuration or indexes of resources associated with the SL PRS configuration. Optionally, when the transmission resources in step 3 are the resources of configured grant type 2 in mode 1, the MAC CE or DCI may further carry time-frequency resource information of the resources of configured grant type 2. Activation by using the MAC CE or DCI can reduce the delay as compared with activation by using an RRC message.

Step 10: The target UE transmits the SL PRS on designated (activated) resources on the PC5 interface.

Step 11: The base station sends a response message for the second message to the LMF.

Optionally, when the transmission resources in step 3 are the resources of configured grant type 2 in mode 1, the response message may further carry time-frequency resource information of the transmission resources for the SL PRS.

Step 12: The LMF sends a provide assistance data (Provide Assistance Data) message to the anchor UE, where the message carries an SL PRS configuration and corresponding transmission resource information of an SL PRS (on the PC5 interface). The message may carry SL PRS configurations of a plurality of anchor UEs and corresponding transmission resource information. Optionally, the message may carry a UE ID of each anchor UE, such as a layer 2 ID. Optionally, the plurality of anchor UEs or SL PRS configurations have different measurement priorities. For example, a higher position in an order in a list means a higher measurement priority.

Step 13: The LMF sends a request location information (Request Location Information) message to the anchor UE, requesting the target UE to perform SL positioning measurement.

Step 14: The anchor UE performs SL PRS measurement based on SL PRS information provided in step 12.

Step 15: The anchor UE sends a measurement result of the SL PRS to the LMF.

Step 16: The LMF obtains location information of the target UE based on the measurement result of the SL PRS.

Step 17: The LMF sends the location information of the target UE to a requester.

In this embodiment of this application, for positioning based on the LMF, a network preconfigures a plurality of sets of SL PRS configurations for the terminal. When the positioning request arrives, the LMF determines a set of configurations to be used, and sends a message to the base station to activate the determined set of configurations. Then the base station performs activation by using a MAC CE or DCI, to enable the UE to send this set of SL PRS configurations on the PC5 interface, where
the RRC reconfiguration message may carry the activation status of the SL PRS configuration; and
the RRC reconfiguration message indicates the transmission resources associated with the SL PRS, where the transmission resources may be the resources of configured grant type 1 or the resources of configured grant type 2 in mode 1.

The transmission resources may be the resources autonomously selected by the anchor UE in mode 2. The RRC reconfiguration message indicates one or more resource pools that can be used to send the SL PRS.

For the resources of configured grant type 2, after activation, an activation response message sent by the base station to the LMF carries the time-frequency resource information of the transmission resources for the SL PRS.

In this embodiment of this application, the plurality of sets of SL PRS configurations are preconfigured, and when positioning measurement is needed, quick activation is performed by using the MAC CE or DCI, thereby reducing the positioning delay.

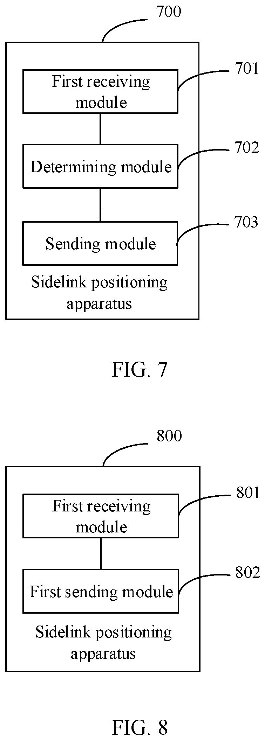

FIG. 7 is a structural diagram of a sidelink positioning apparatus according to an embodiment of this application. As shown in FIG. 7, the apparatus includes:
a first receiving module 701, configured to receive a configuration message from a radio access network device, where the configuration message is used to configure N sets of sidelink SL positioning reference signal configurations, and N is a positive integer greater than 1;
a determining module 702, configured to determine a target SL positioning reference signal configuration in the N sets of SL positioning reference signal configurations; and
a sending module 703, configured to send an SL positioning reference signal based on the target SL positioning reference signal configuration.

Optionally, the determining module 702 is configured to receive an activation message from the radio access network device, and determine the target SL positioning reference signal configuration based on the activation message, where
the activation message is used for at least one of the following:
activating the target SL positioning reference signal configuration; and
activating transmission resources associated with the target SL positioning reference signal configuration.

Optionally, the activation message is sent by using a media access control MAC control element CE or downlink control information DCI.

Optionally, the activation message includes an identifier or index of the target SL positioning reference signal configuration.

Optionally, the configuration message is further used to configure at least one of the following:
transmission resources associated with the N sets of SL positioning reference signal configurations;
an activation status of the N sets of SL positioning reference signal configurations; and
an activation status of the transmission resources associated with the N sets of SL positioning reference signal configurations.

Optionally, the transmission resources include at least one of the following:
resources of a first configured grant type, resources of a second configured grant type, dynamically scheduled resources, and autonomously selected resources, where
the resources of the first configured grant type are transmission resources on which a first terminal is capable of directly sending an SL positioning reference signal;
the resources of the second configured grant type are transmission resources on which the first terminal sends an SL positioning reference signal based on an activation command;
the dynamically scheduled resources are resources dynamically scheduled by the radio access network device for sending an SL positioning reference signal; and
the autonomously selected resources are resources selected by the first terminal through sensing for sending an SL positioning reference signal.

Optionally, the first terminal is a target terminal for SL positioning, or the first terminal is an assisting terminal or an anchor terminal for SL positioning.

The sidelink positioning apparatus can improve positioning performance of the terminal.

The sidelink positioning apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of terminal. The other devices may be a server, a network attached storage (Network Attached Storage, NAS), and the like. This is not specifically limited in this embodiment of this application.

The sidelink positioning apparatus provided in this embodiment of this application can implement each process implemented in the method embodiment shown in FIG. 2, with the same technical effect achieved. To avoid repetition, details are not described herein again.

FIG. 8 is a structural diagram of a sidelink positioning apparatus according to an embodiment of this application. As shown in FIG. 8, the apparatus includes:
a first receiving module 801, configured to receive a sidelink SL positioning request; and
a first sending module 802, configured to send a first message to a radio access network device based on the positioning request, where the first message is used to request to activate a target SL positioning reference signal configuration of a first terminal.

Optionally, the first message includes at least one of the following:
identification information of the first terminal; and
an identifier or index of the target SL positioning reference signal configuration.

Optionally, the apparatus further includes:
a second receiving module, configured to receive a second message sent by the radio access network device, where the second message includes at least one of the following:
information of the first terminal; and
information of an SL positioning reference signal configuration of the first terminal, where the information of the SL positioning reference signal configuration includes the target SL positioning reference signal configuration of the first terminal.

Optionally, the information of the first terminal includes at least one of the following:
location information of the first terminal; and
identification information of the first terminal.

Optionally, the identification information of the first terminal includes an SL layer 2 identity of the first terminal.

Optionally, the apparatus further includes:
a second sending module, configured to send a third message to the radio access network device, where the third message includes at least one of the following:
one or more sets of positioning reference signal characteristic information;
one or more sets of quality of service QoS information; and
a configuration quantity.

Optionally, the third message is a message associated with a terminal; or
the third message is a message not associated with a terminal.

Optionally, the apparatus further includes:
a third receiving module, configured to receive a response message sent by the radio access network device for the first message, where the response message includes time-frequency transmission resources associated with the target SL positioning reference signal configuration.

Optionally, the apparatus further includes:
a third sending module, configured to send an indication message to a second terminal, where the indication message is used to indicate the target SL positioning reference signal configuration.

Optionally, the indication message is further used to indicate at least one of the following:
time-frequency transmission resources associated with the target SL positioning reference signal configuration; and
identification information of the first terminal.

Optionally, the apparatus further includes:
a fourth sending module, configured to send a positioning request message to the second terminal, where the positioning request message is used to request the second terminal to perform SL positioning reference signal measurement.

The sidelink positioning apparatus can improve positioning performance of the terminal.

The sidelink positioning apparatus in this embodiment of this application may be an electronic device, for example, an electronic device with an operating system, or may be a component in an electronic device, for example, an integrated circuit or a chip. The electronic device may be a core network device or a server.

The sidelink positioning apparatus provided in this embodiment of this application can implement each process implemented in the method embodiment shown in FIG. 3, with the same technical effect achieved. To avoid repetition, details are not described herein again.

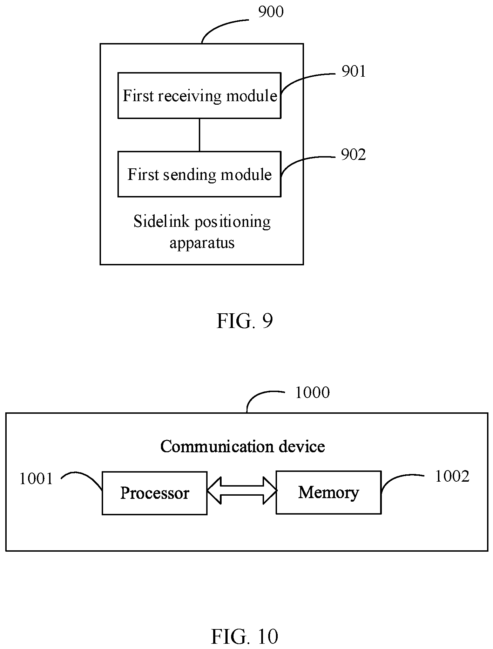

FIG. 9 is a structural diagram of a sidelink positioning apparatus according to an embodiment of this application. As shown in FIG. 9, the apparatus includes:
a first receiving module 901, configured to receive a first message sent by a positioning server, where the first message is used to request to activate a target SL positioning reference signal configuration of a first terminal; and
a first sending module 902, configured to send an activation message to the first terminal, where
the activation message is used for at least one of the following:
   activating the target SL positioning reference signal configuration; and
   activating transmission resources associated with the target SL positioning reference signal configuration.

Optionally, the first message includes at least one of the following:
identification information of the first terminal; and
an identifier or index of the target SL positioning reference signal configuration.

Optionally, the apparatus further includes:
a second sending module, configured to send a second message to the positioning server, where the second message includes at least one of the following:
information of the first terminal; and
information of an SL positioning reference signal configuration of the first terminal, where the information of the SL positioning reference signal configuration includes the target SL positioning reference signal configuration of the first terminal.

Optionally, the information of the first terminal includes at least one of the following:
location information of the first terminal; and
identification information of the first terminal.

Optionally, the identification information of the first terminal includes an SL layer 2 identity of the first terminal.

Optionally, the apparatus further includes:
a second receiving module, configured to receive a third message from the positioning server, where the third message includes at least one of the following:
one or more sets of positioning reference signal characteristic information;
one or more sets of quality of service QoS information; and
a configuration quantity.

Optionally, the apparatus further includes:
a third sending module, configured to send a configuration message to the first terminal, where the configuration message is used to configure N sets of SL positioning reference signal configurations, the target SL positioning reference signal configuration is a configuration in the N sets of SL positioning reference signal configurations, and N is a positive integer greater than 1.

Optionally, the configuration message is further used to configure at least one of the following:
transmission resources associated with the N sets of SL positioning reference signal configurations;
an activation status of the N sets of SL positioning reference signal configurations; and
an activation status of the transmission resources associated with the N sets of SL positioning reference signal configurations.

Optionally, the transmission resources include at least one of the following:
resources of a first configured grant type, resources of a second configured grant type, dynamically scheduled resources, and autonomously selected resources, where
the resources of the first configured grant type are transmission resources on which the first terminal is capable of directly sending an SL positioning reference signal;
the resources of the second configured grant type are transmission resources on which the first terminal sends an SL positioning reference signal based on an activation command;
the dynamically scheduled resources are resources dynamically scheduled by a radio access network device for sending an SL positioning reference signal; and
the autonomously selected resources are resources selected by the first terminal through sensing for sending an SL positioning reference signal.

Optionally, the activation message is sent by using a media access control MAC control element CE or downlink control information DCI.

Optionally, the activation message includes an identifier or index of the target SL positioning reference signal configuration.

The sidelink positioning apparatus can improve positioning performance of the terminal.

The sidelink positioning apparatus in this embodiment of this application may be an electronic device, for example, an electronic device with an operating system, or may be a component in an electronic device, for example, an integrated circuit or a chip. The electronic device may be a radio access network device.

The sidelink positioning apparatus provided in this embodiment of this application can implement each process implemented in the method embodiment shown in FIG. 4, with the same technical effect achieved. To avoid repetition, details are not described herein again.

Optionally, as shown in FIG. 10, an embodiment of this application further provides a communication device 1000, including a processor 1001 and a memory 1002. The memory 1002 stores a program or instructions executable on the processor 1001. For example, when the communication device 1000 is a terminal, and the program or instructions are executed by the processor 1001, the steps of the foregoing embodiment of the sidelink positioning method on the first terminal side are implemented, with the same technical effect achieved. When the communication device 1000 is a positioning server, and the program or instructions are executed by the processor 1001, the steps of the foregoing embodiment of the sidelink positioning method on the positioning server side are implemented, with the same technical effect achieved. When the communication device 1000 is a radio access network device, and the program or instructions are executed by the processor 1001, the steps of the foregoing embodiment of the sidelink positioning method on the radio access network device side are implemented, with the same technical effect achieved. To avoid repetition, details are not described herein again.

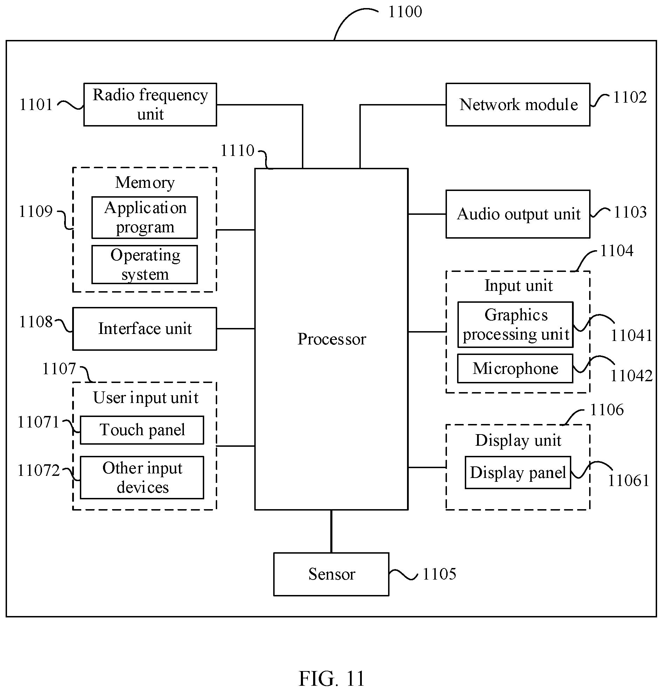

An embodiment of this application further provides a terminal, including a processor and a communication interface. The communication interface is configured to receive a configuration message from a radio access network device, where the configuration message is used to configure N sets of sidelink SL positioning reference signal configurations, and N is a positive integer greater than 1. The processor or the communication interface is configured to determine a target SL positioning reference signal configuration in the N sets of SL positioning reference signal configurations. The communication interface is further configured to send an SL positioning reference signal based on the target SL positioning reference signal configuration. The terminal embodiment corresponds to the foregoing method embodiment on the first terminal side, and each implementation process and implementation of the foregoing method embodiment can be applied to the terminal embodiment, with the same technical effect achieved. Specifically, FIG. 11 is a schematic diagram of a hardware structure of a terminal for implementing an embodiment of this application.

The terminal 1100 includes but is not limited to at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art may understand that the terminal 1100 may further include a power supply (for example, a battery) supplying power to all components. The power supply may be logically connected to the processor 1110 through a power management system. In this way, functions such as charge management, discharge management, and power consumption management are implemented by using the power management system. The terminal structure shown in FIG. 11 does not constitute a limitation on the terminal. The terminal may include more or fewer components than those shown in the figure, or some components are combined, or component arrangements are different. Details are not described herein again.

It should be understood that, in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1101 may transmit the downlink data to the processor 1110 for processing. In addition, the radio frequency unit 1101 may send uplink data to the network-side device. Usually, the radio frequency unit 1101 includes but is not limited to an antenna, an amplifier, a transceiver, a coupler, a low noise amplifier, a duplexer, and the like.

The memory 1109 may be configured to store software programs or instructions and various data. The memory 1109 may primarily include a first storage area for storing programs or instructions and a second storage area for storing data. The first storage area may store an operating system, an application program or instructions required by at least one function (such as an audio play function and an image play function), and the like. In addition, the memory 1109 may include a volatile memory or a non-volatile memory, or the memory 1109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1109 in this embodiment of this application includes but is not limited to these and any other suitable types of memories.

The processor 1110 may include one or more processing units. Optionally, the processor 1110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1110.

The radio frequency unit 1101 is configured to receive a configuration message from a radio access network device, where the configuration message is used to configure N sets of sidelink SL positioning reference signal configurations, and N is a positive integer greater than 1.

The radio frequency unit 1101 or the processor 1110 is configured to determine a target SL positioning reference signal configuration in the N sets of SL positioning reference signal configurations.

The radio frequency unit 1101 is further configured to send an SL positioning reference signal based on the target SL positioning reference signal configuration.

Optionally, the determining a target SL positioning reference signal configuration in the N sets of SL positioning reference signal configurations includes:
receiving an activation message from the radio access network device, and determining the target SL positioning reference signal configuration based on the activation message, where
the activation message is used for at least one of the following:
   activating the target SL positioning reference signal configuration; and
   activating transmission resources associated with the target SL positioning reference signal configuration.

Optionally, the activation message is sent by using a media access control MAC control element CE or downlink control information DCI.

Optionally, the activation message includes an identifier or index of the target SL positioning reference signal configuration.

Optionally, the configuration message is further used to configure at least one of the following:
transmission resources associated with the N sets of SL positioning reference signal configurations;
an activation status of the N sets of SL positioning reference signal configurations; and
an activation status of the transmission resources associated with the N sets of SL positioning reference signal configurations.

Optionally, the transmission resources include at least one of the following:
resources of a first configured grant type, resources of a second configured grant type, dynamically scheduled resources, and autonomously selected resources, where
the resources of the first configured grant type are transmission resources on which the first terminal is capable of directly sending an SL positioning reference signal;
the resources of the second configured grant type are transmission resources on which the first terminal sends an SL positioning reference signal based on an activation command;
the dynamically scheduled resources are resources dynamically scheduled by the radio access network device for sending an SL positioning reference signal; and
the autonomously selected resources are resources selected by the first terminal through sensing for sending an SL positioning reference signal.

Optionally, the first terminal is a target terminal for SL positioning, or the first terminal is an assisting terminal or an anchor terminal for SL positioning.

The terminal can improve positioning performance of the terminal.

An embodiment of this application further provides a positioning server, including a processor and a communication interface. The communication interface is configured to: receive a sidelink SL positioning request; and send a first message to a radio access network device based on the positioning request, where the first message is used to request to activate a target SL positioning reference signal configuration of a first terminal. The positioning server embodiment corresponds to the foregoing method embodiment on the positioning server side, and each implementation process and implementation of the foregoing method embodiment can be applied to the positioning server embodiment, with the same technical effect achieved.

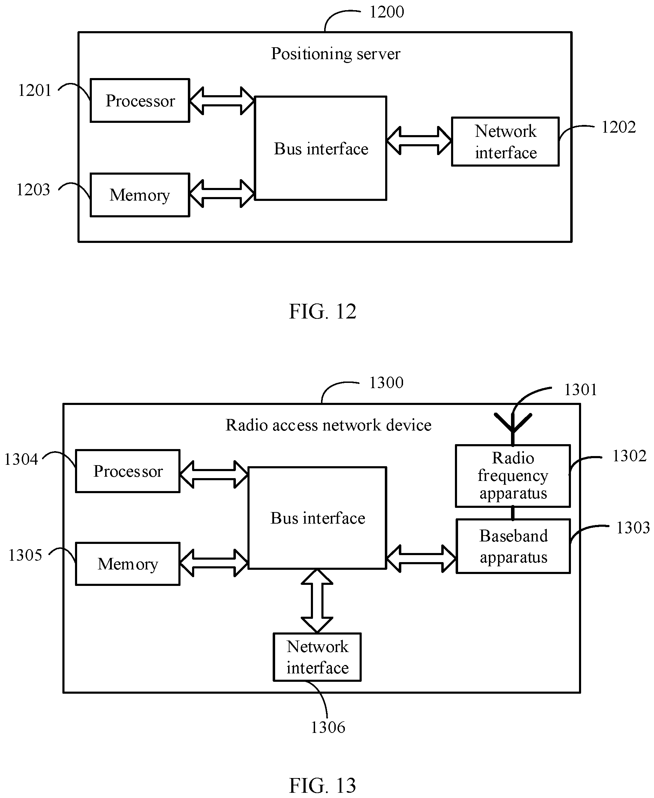

Specifically, an embodiment of this application further provides a positioning server. As shown in FIG. 12, the positioning server 1200 includes a processor 1201, a network interface 1202, and a memory 1203. The network interface 1202 is, for example, a common public radio interface (common public radio interface, CPRI).

Specifically, the positioning server 1200 in this embodiment of this application further includes a program or instructions stored in the memory 1203 and executable on the processor 1201. The processor 1201 invokes the program or instructions in the memory 1203 to perform the method performed by each module shown in FIG. 8, with the same technical effect achieved. To avoid repetition, details are not described herein again.

The processor 1201 or the network interface 1202 is configured to receive a sidelink SL positioning request.

The network interface 1202 is further configured to send a first message to a radio access network device based on the positioning request, where the first message is used to request to activate a target SL positioning reference signal configuration of a first terminal.

Optionally, the first message includes at least one of the following:
identification information of the first terminal; and
an identifier or index of the target SL positioning reference signal configuration.

Optionally, before the positioning server receives the SL positioning request, the network interface 1202 is further configured to:
receive a second message sent by the radio access network device, where the second message includes at least one of the following:
information of the first terminal; and
information of an SL positioning reference signal configuration of the first terminal, where the information of the SL positioning reference signal configuration includes the target SL positioning reference signal configuration of the first terminal.

Optionally, the information of the first terminal includes at least one of the following:
location information of the first terminal; and
identification information of the first terminal.

Optionally, the identification information of the first terminal includes an SL layer 2 identity of the first terminal.

Optionally, before the positioning server receives the second message sent by the radio access network device, the network interface 1202 is further configured to:
send a third message to the radio access network device, where the third message includes at least one of the following:
one or more sets of positioning reference signal characteristic information;
one or more sets of quality of service QoS information; and
a configuration quantity.

Optionally, the third message is a message associated with a terminal; or
the third message is a message not associated with a terminal.

Optionally, the network interface 1202 is further configured to:
receive a response message sent by the radio access network device for the first message, where the response message includes time-frequency transmission resources associated with the target SL positioning reference signal configuration.

Optionally, the network interface 1202 is further configured to:
send an indication message to a second terminal, where the indication message is used to indicate the target SL positioning reference signal configuration.

Optionally, the indication message is further used to indicate at least one of the following:
time-frequency transmission resources associated with the target SL positioning reference signal configuration; and
identification information of the first terminal.

Optionally, the network interface 1202 is further configured to:
send a positioning request message to the second terminal, where the positioning request message is used to request the second terminal to perform SL positioning reference signal measurement.

The positioning server can improve positioning performance of the terminal.

An embodiment of this application further provides a radio access network device, including a processor and a communication interface. The communication interface is configured to: receive a first message sent by a positioning server, where the first message is used to request to activate a target SL positioning reference signal configuration of a first terminal; and send an activation message to the first terminal, where the activation message is used for at least one of the following: activating the target SL positioning reference signal configuration; and activating transmission resources associated with the target SL positioning reference signal configuration. The radio access network device embodiment corresponds to the foregoing method embodiment on the radio access network device side, and each implementation process and implementation of the foregoing method embodiment can be applied to the radio access network device embodiment, with the same technical effect achieved.

Specifically, an embodiment of this application further provides a radio access network device. As shown in FIG. 13, the radio access network device 1300 includes an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information by using the antenna 1301, and sends the received information to the baseband apparatus 1303 for processing. In a downlink direction, the baseband apparatus 1303 processes to-be-sent information, and sends the information to the radio frequency apparatus 1302; and the radio frequency apparatus 1302 processes the received information and then sends the information out by using the antenna 1301.

The method performed by the radio access network device in the foregoing embodiment may be implemented in the baseband apparatus 1303. The baseband apparatus 1303 includes a baseband processor.

The baseband apparatus 1303 may include, for example, at least one baseband unit, where a plurality of chips are disposed on the baseband unit. As shown in FIG. 13, one of the chips is, for example, the baseband processor, connected to the memory 1305 by using a bus interface, to invoke a program in the memory 1305 to perform the operation of the network device shown in the foregoing method embodiment.

The radio access network device may further include a network interface 1306, where the interface is, for example, a common public radio interface (common public radio interface, CPRI).

Specifically, the radio access network device 1300 in this embodiment of the present invention further includes a program or instructions stored in the memory 1305 and executable on the processor 1304. When the processor 1304 invokes the program or instructions in the memory 1305, the method performed by each module shown in FIG. 9 is performed, with the same technical effect achieved. To avoid repetition, details are not described herein again.

The radio frequency apparatus 1302 is configured to: receive a first message sent by a positioning server, where the first message is used to request to activate a target SL positioning reference signal configuration of a first terminal; and send an activation message to the first terminal, where
the activation message is used for at least one of the following:
activating the target SL positioning reference signal configuration; and
activating transmission resources associated with the target SL positioning reference signal configuration.

Optionally, the first message includes at least one of the following:
identification information of the first terminal; and
an identifier or index of the target SL positioning reference signal configuration.

Optionally, before the radio access network device receives the first message sent by the positioning server, the radio frequency apparatus 1302 is further configured to:
send a second message to the positioning server, where the second message includes at least one of the following:
information of the first terminal; and
information of an SL positioning reference signal configuration of the first terminal, where the information of the SL positioning reference signal configuration includes the target SL positioning reference signal configuration of the first terminal.

Optionally, the information of the first terminal includes at least one of the following:
location information of the first terminal; and
identification information of the first terminal.

Optionally, the identification information of the first terminal includes an SL layer 2 identity of the first terminal.

Optionally, before the radio access network device sends the second message to the positioning server, the radio frequency apparatus 1302 is further configured to:
receive a third message from the positioning server, where the third message includes at least one of the following:
one or more sets of positioning reference signal characteristic information;
one or more sets of quality of service QoS information; and
a configuration quantity.

Optionally, before the radio access network device receives the first message sent by the positioning server, the radio frequency apparatus 1302 is further configured to:
send a configuration message to the first terminal, where the configuration message is used to configure N sets of SL positioning reference signal configurations, the target SL positioning reference signal configuration is a configuration in the N sets of SL positioning reference signal configurations, and N is a positive integer greater than 1.

Optionally, the configuration message is further used to configure at least one of the following:
transmission resources associated with the N sets of SL positioning reference signal configurations;
an activation status of the N sets of SL positioning reference signal configurations; and
an activation status of the transmission resources associated with the N sets of SL positioning reference signal configurations.

Optionally, the transmission resources include at least one of the following:
resources of a first configured grant type, resources of a second configured grant type, dynamically scheduled resources, and autonomously selected resources, where
the resources of the first configured grant type are transmission resources on which the first terminal is capable of directly sending an SL positioning reference signal;
the resources of the second configured grant type are transmission resources on which the first terminal sends an SL positioning reference signal based on an activation command;
the dynamically scheduled resources are resources dynamically scheduled by the radio access network device for sending an SL positioning reference signal; and
the autonomously selected resources are resources selected by the first terminal through sensing for sending an SL positioning reference signal.

Optionally, the activation message is sent by using a media access control MAC control element CE or downlink control information DCI.

Optionally, the activation message includes an identifier or index of the target SL positioning reference signal configuration.

The radio access network device can improve positioning performance of the terminal.

An embodiment of this application further provides a readable storage medium. The readable storage medium stores a program or instructions. When the program or instructions are executed by a processor, the steps of the sidelink positioning method provided in this embodiment of this application are implemented.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the sidelink positioning method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the sidelink positioning method, with the same technical effect achieved. To avoid repetition, details are not described herein again.

An embodiment of this application further provides a sidelink positioning system, including a first terminal, a positioning server, and a radio access network device. The first terminal may be configured to perform the steps of the sidelink positioning method on the first terminal side according to the embodiments of this application. The positioning server may be configured to perform the steps of the sidelink positioning method on the positioning server side according to the embodiments of this application. The radio access network device may be configured to perform the steps of the sidelink positioning method on the radio access network device side according to the embodiments of this application.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A sidelink positioning method, comprising:
receiving, by a first terminal, a configuration message from a radio access network device, wherein the configuration message is used to configure N sets of sidelink SL positioning reference signal configurations, and N is a positive integer greater than 1;
determining, by the first terminal, a target SL positioning reference signal configuration in the N sets of SL positioning reference signal configurations; and
sending, by the first terminal, an SL positioning reference signal based on the target SL positioning reference signal configuration.

2. The method according to claim 1, wherein the determining, by the first terminal, a target SL positioning reference signal configuration in the N sets of SL positioning reference signal configurations comprises:
receiving, by the first terminal, an activation message from the radio access network device, and determining the target SL positioning reference signal configuration based on the activation message, wherein
the activation message is used for at least one of the following:
activating the target SL positioning reference signal configuration; and
activating transmission resources associated with the target SL positioning reference signal configuration.

3. The method according to claim 2, wherein the activation message is sent by using a media access control MAC control element CE or downlink control information DCI.

4. The method according to claim 2, wherein the activation message comprises an identifier or index of the target SL positioning reference signal configuration.

5. The method according to claim 1, wherein the configuration message is further used to configure at least one of the following:
transmission resources associated with the N sets of SL positioning reference signal configurations;
an activation status of the N sets of SL positioning reference signal configurations; and
an activation status of the transmission resources associated with the N sets of SL positioning reference signal configurations.

6. The method according to claim 5, wherein the transmission resources comprise at least one of the following:
resources of a first configured grant type, resources of a second configured grant type, dynamically scheduled resources, and autonomously selected resources, wherein
the resources of the first configured grant type are transmission resources on which the first terminal is capable of directly sending an SL positioning reference signal;
the resources of the second configured grant type are transmission resources on which the first terminal sends an SL positioning reference signal based on an activation command;
the dynamically scheduled resources are resources dynamically scheduled by the radio access network device for sending an SL positioning reference signal; and
the autonomously selected resources are resources selected by the first terminal through sensing for sending an SL positioning reference signal.

7. The method according to any one of claims 1 to 5, wherein the first terminal is a target terminal for SL positioning, or the first terminal is an assisting terminal or an anchor terminal for SL positioning.

8. A sidelink positioning method, comprising:
receiving, by a positioning server, a sidelink SL positioning request; and
sending, by the positioning server, a first message to a radio access network device based on the positioning request, wherein the first message is used to request to activate a target SL positioning reference signal configuration of a first terminal.

9. The method according to claim 8, wherein the first message comprises at least one of the following:
identification information of the first terminal; and
an identifier or index of the target SL positioning reference signal configuration.

10. The method according to claim 8, wherein before the receiving, by a positioning server, an SL positioning request, the method further comprises:
receiving, by the positioning server, a second message sent by the radio access network device, wherein the second message comprises at least one of the following:
information of the first terminal; and
information of an SL positioning reference signal configuration of the first terminal, wherein the information of the SL positioning reference signal configuration comprises the target SL positioning reference signal configuration of the first terminal.

11. The method according to claim 10, wherein the information of the first terminal comprises at least one of the following:
location information of the first terminal; and
identification information of the first terminal.

12. The method according to claim 11, wherein the identification information of the first terminal comprises an SL layer 2 identity of the first terminal.

13. The method according to claim 10, wherein before the receiving, by the positioning server, a second message sent by the radio access network device, the method further comprises:
sending, by the positioning server, a third message to the radio access network device, wherein the third message comprises at least one of the following:
one or more sets of positioning reference signal characteristic information;
one or more sets of quality of service QoS information; and
a configuration quantity.

14. The method according to claim 13, wherein the third message is a message associated with a terminal; or
the third message is a message not associated with a terminal.

15. The method according to claim 8, wherein the method further comprises:
receiving, by the positioning server, a response message sent by the radio access network device for the first message, wherein the response message comprises time-frequency transmission resources associated with the target SL positioning reference signal configuration.

16. The method according to any one of claims 8 to 15, wherein the method further comprises:
sending, by the positioning server, an indication message to a second terminal, wherein the indication message is used to indicate the target SL positioning reference signal configuration.

17. The method according to claim 16, wherein the indication message is further used to indicate at least one of the following:
time-frequency transmission resources associated with the target SL positioning reference signal configuration; and
identification information of the first terminal.

18. The method according to claim 16, wherein the method further comprises:
sending, by the positioning server, a positioning request message to the second terminal, wherein the positioning request message is used to request the second terminal to perform SL positioning reference signal measurement.

19. A sidelink positioning method, comprising:
receiving, by a radio access network device, a first message sent by a positioning server, wherein the first message is used to request to activate a target SL positioning reference signal configuration of a first terminal; and
sending, by the radio access network device, an activation message to the first terminal, wherein
the activation message is used for at least one of the following:
activating the target SL positioning reference signal configuration; and
activating transmission resources associated with the target SL positioning reference signal configuration.

20. The method according to claim 19, wherein the first message comprises at least one of the following:
identification information of the first terminal; and
an identifier or index of the target SL positioning reference signal configuration.

21. The method according to claim 19, wherein before the receiving, by a radio access network device, a first message sent by a positioning server, the method further comprises:
sending, by the radio access network device, a second message to the positioning server, wherein the second message comprises at least one of the following:
information of the first terminal; and
information of an SL positioning reference signal configuration of the first terminal, wherein the information of the SL positioning reference signal configuration comprises the target SL positioning reference signal configuration of the first terminal.

22. The method according to claim 21, wherein the information of the first terminal comprises at least one of the following:
location information of the first terminal; and
identification information of the first terminal.

23. The method according to claim 22, wherein the identification information of the first terminal comprises an SL layer 2 identity of the first terminal.

24. The method according to claim 21, wherein before the sending, by the radio access network device, a second message to the positioning server, the method further comprises:
receiving, by the radio access network device, a third message from the positioning server, wherein the third message comprises at least one of the following:
one or more sets of positioning reference signal characteristic information;
one or more sets of quality of service QoS information; and
a configuration quantity.

25. The method according to any one of claims 19 to 24, wherein before the receiving, by a radio access network device, a first message sent by a positioning server, the method further comprises:
sending, by the radio access network device, a configuration message to the first terminal, wherein the configuration message is used to configure N sets of SL positioning reference signal configurations, the target SL positioning reference signal configuration is a configuration in the N sets of SL positioning reference signal configurations, and N is a positive integer greater than 1.

26. The method according to claim 25, wherein the configuration message is further used to configure at least one of the following:
transmission resources associated with the N sets of SL positioning reference signal configurations;
an activation status of the N sets of SL positioning reference signal configurations; and
an activation status of the transmission resources associated with the N sets of SL positioning reference signal configurations.

27. The method according to claim 26, wherein the transmission resources comprise at least one of the following:
resources of a first configured grant type, resources of a second configured grant type, dynamically scheduled resources, and autonomously selected resources, wherein
the resources of the first configured grant type are transmission resources on which the first terminal is capable of directly sending an SL positioning reference signal;
the resources of the second configured grant type are transmission resources on which the first terminal sends an SL positioning reference signal based on an activation command;
the dynamically scheduled resources are resources dynamically scheduled by the radio access network device for sending an SL positioning reference signal; and
the autonomously selected resources are resources selected by the first terminal through sensing for sending an SL positioning reference signal.

28. The method according to claim 19, wherein the activation message is sent by using a media access control MAC control element CE or downlink control information DCI.

29. The method according to claim 28, wherein the activation message comprises an identifier or index of the target SL positioning reference signal configuration.

30. A sidelink positioning apparatus, comprising:
a first receiving module, configured to receive a configuration message from a radio access network device, wherein the configuration message is used to configure N sets of sidelink SL positioning reference signal configurations, and N is a positive integer greater than 1;
a determining module, configured to determine a target SL positioning reference signal configuration in the N sets of SL positioning reference signal configurations; and
a sending module, configured to send an SL positioning reference signal based on the target SL positioning reference signal configuration.

31. A sidelink positioning apparatus, comprising:
a first receiving module, configured to receive a sidelink SL positioning request; and
a first sending module, configured to send a first message to a radio access network device based on the positioning request, wherein the first message is used to request to activate a target SL positioning reference signal configuration of a first terminal.

32. A sidelink positioning apparatus, comprising:
a first receiving module, configured to receive a first message sent by a positioning server, wherein the first message is used to request to activate a target SL positioning reference signal configuration of a first terminal; and
a first sending module, configured to send an activation message to the first terminal, wherein
the activation message is used for at least one of the following:
activating the target SL positioning reference signal configuration; and
activating transmission resources associated with the target SL positioning reference signal configuration.

33. A terminal, comprising a processor and a memory, wherein the memory stores a program or instructions executable on the processor, and when the program or instructions are executed by the processor, the steps of the sidelink positioning method according to any one of claims 1 to 7 are implemented.

34. A positioning server, comprising a processor and a memory, wherein the memory stores a program or instructions executable on the processor, and when the program or instructions are executed by the processor, the steps of the sidelink positioning method according to any one of claims 8 to 18 are implemented.

35. A radio access network device, comprising a processor and a memory, wherein the memory stores a program or instructions executable on the processor, and when the program or instructions are executed by the processor, the steps of the sidelink positioning method according to any one of claims 19 to 29 are implemented.

36. A readable storage medium, wherein the readable storage medium stores a program or instructions, and when the program or instructions are executed by a processor, the steps of the sidelink positioning method according to any one of claims 1 to 7 are implemented, or the steps of the sidelink positioning method according to any one of claims 8 to 18 are implemented, or the steps of the sidelink positioning method according to any one of claims 19 to 29 are implemented.
